# EUROPEAN PATENT SPECIFICATION

(11) **EP 2 158 645 B1**
(45) Date of publication and mention of the grant of the patent: **24.12.2014**
(21) Application number: 07795680.3
(22) Date of filing: 01.06.2007
(51) Int. Cl.: H01R 13/56, H01R 13/53

(54) **A CABLE CONNECTOR COMPRISING A JACKET SLEEVE**
KABELVERBINDER MIT KABELMANTEL
UN CONNECTEUR DE CÂBLE AVEC UN MANCHON DE GAINE

(43) Date of publication of application: 03.03.2010
(60) Divisional application: 14192651.9
(73) Proprietor: Cooper Technologies Company, Houston, TX 77002 (US)
(72) Inventor: HUGHES, David Charles, Rubicon, WI 53078 (US); MAKAL, Mitchell, Menomonee Falls, WI 53051 (US); GEBHARD, Michael John, Sr., Waukesha, WI 53188 (US); ROSCIZEWSKI, Paul Michael, Eagle, WI 53119 (US)
(74) Representative: Smee, Anthony James Michael
(86) International application number: PCT/US2007/013084
(87) International publication number: WO 2008/147369

(56) References cited:
- EP-A2- 1 245 977
- US-A- 5 461 690
- US-A- 5 640 476
- US-A1- 2004 234 209
- US-A1- 2005 112 944
- US-B1- 6 220 888
- US-B1- 6 220 888
- US-B1- 6 429 373
- US-B2- 6 733 322
- US-B2- 7 018 236

## Description

### FIELD OF THE INVENTION

The present invention relates generally to the field of power distribution equipment. More particularly, the invention relates to jacket sleeves used with cable and connectors for power distribution equipment.

### BACKGROUND OF THE INVENTION

Separable connectors are typically employed to interconnect sources of energy, such as electrical distribution network conductors, to localized distribution components, such as switchgears and transformers. These connectors, for example, typically include a bushing insert, which is mounted in the bushing well of the switchgear, and an elbow connector which is releasably connected to the bushing insert on one end and a distribution conductor, such as a high voltage cable, of the network circuit feeding the switchgear. When the elbow is interconnected to the bushing, the switchgear is thus interconnected into the distribution network and thereby energized. Likewise, if the elbow is removed, the switchgear is disconnected from the distribution network and the switchgear is de-energized.

As part of the connection process, the elbow connectors are typically attached to an above ground or underground power cable. In order to attach the cable to the elbow connector, the protective layers of the cable, including the concentric neutrals that provide a path of return for the electrons in an alternating current system, must be removed, or peeled back, from a portion of the cable so that the conductor portion of the cable may be attached to the elbow connector. While a portion of the exposed cable is positioned within the elbow connector, another portion of the exposed cable is left outside of the elbow connector and could be exposed to the elements. The concentric neutrals are particularly at risk and tend to decay rapidly when exposed to moisture. Moisture causes the concentric neutrals to oxidize and corrode. After a certain level of corrosion has built up, the cable needs to be replaced because the return path for the electrons has been permanently disrupted. While the exposed portions of the cable are at risk for decay and damage due to exposure to water and other elements, unexposed portions of the cable are also at risk. For example, water that reaches and contacts the concentric neutrals of the exposed portion of the cable can be wicked away from the point of contact to other areas miles away from the exposed portion of the cable, causing corrosion and failure of the concentric neutrals along long sections of cable.

In order to protect the cable at the connection point with the elbow and other connectors, cable jacket sleeves were created. The cable jacket sleeves had a generally hollow cylindrical shapeand came in three primary varieties: pre-molded slide-on, heat shrink, and cold shrinkable. Heat shrink sleeves were placed over the exposed portion of the cable as described below. The lineperson would then use a blowtorch or other heat source to shrink the sleeve around the exposed portion of the cable to create a tighter seal.

Cold shrinkable sleeves are pre-expanded and placed onto a removable core. After the cold shrinkable sleeve is placed over the cable joint, the core is removed and the sleeve shrinks back to its original size, sealing the joint. Pre-molded slide-on sleeves have typically have to be lubricated to reduce the friction created by the tight interference fit required to seal the joint and are manually pushed or pulled onto the cable by a lineperson. Pre-molded slide-on sleeves generally require more steps and force to install, but are simpler and cheaper to manufacture than the other sleeve varieties.

Pre-molded slide-on jacket sleeves required a lineperson to place the seal on the cable prior to attaching the elbow connector. Once the elbow connector was attached to the cable, mastic and/or electrical tape was placed over the exposed portion of the cable and the jacket sleeve had to be pulled back up the cable and across the mastic until it covered the exposed portion of the cable and a portion of the elbow connector. Small tabs were added along both ends of some of the pre-molded slide-on sleeves to assist a lineperson in pulling the sleeve up and down the cable body. When completing the attachment of several connectors to cables, the multiple steps of pulling the sleeve down onto the cable and then pulling it back up the cable once the elbow connector was attached greatly increased the time and effort needed to properly protect the cable.

In order to reduce the time necessary to attach a cable to an elbow connector and properly protect the exposed portions of the cable with a sleeve, and to reduce the overall cost of the sleeve and elbow connector, a conventional combination sleeve and elbow connector has been created. The combination creates an integral jacket sleeve along the portion of the elbow connector to which the cable is attached. The combination is made by molding the elbow connector and the jacket sleeve together, at the same time and from the same material, thereby reducing cost and manufacturing time. In addition, since the jacket sleeve is integrally built into the elbow connection, once a lineperson has attached a cable, he or she need only pull the jacket sleeve in one direction, down over the exposed portion of the cable. In order to assist the lineperson in grasping and pulling the cable, two small tabs have been added to and extend longitudinally from the jacket sleeve.

Unfortunately, the combination jacket sleeve and elbow connector has several drawbacks. First, the exterior of most elbow connectors is made of a conductive or semi-conductive rubber so that the elbow connector can drain off a charge and be at ground potential. The rubber is made conductive by adding carbon black to it. One side effect of adding carbon black to rubber is that it makes the rubber extremely stiff. This side effect is beneficial for the elbow connector because it provides added strength to the elbow connector thereby reducing cracking or tearing along the pulling eye and other stress points of the elbow connector when the connector is being attached or detached from the bushing. By making the jacket sleeve from the same material the jacket sleeve is stiff and not pliable. The stiffer jacket sleeve is difficult to get over the exposed portion of the cable, once mastic and/or tape has been applied because the sleeve does not stretch well but still must have an interference fit with the tape or mastic covering the exposed portion of the cable.

Another problem with the combination jacket sleeve and elbow connector is that the small tabs provided along the edge of the jacket sleeve are not sufficient to assist in grasping and pulling the jacket sleeve over the tape and mastic. When connecting cable to the elbow connectors and the elbow connectors to the switchgear or transformer, a lineperson must apply layers of grease to each of the connecting bodies. As a function of the application, a lineperson frequently gets grease on their hands, making it difficult to grasp and hold onto the small tabs provided on the jacket sleeve.

Yet another problem with the combination jacket sleeve and elbow connector is that, the window for error in building up the protective layers of tape and mastic on the exposed portion of the cable is substantially less with the stiffer material being used for the jacket sleeve. Mastic is a gooey adhesive (and in some forms a tape), similar to putty, that bonds to itself and provides a water barrier for the exposed portion of the cable. Unfortunately, mastic tends to become loose and runny under extreme heat and comes off of the cable if it is not held in place. Therefore, electrical tape is typically applied over the mastic in several layers to hold the mastic in place and provide compression. The jacket sleeve generally has an inside diameter that is greater than the cable so that the layer of mastic and tape may be applied and an interference fit with the tape can be created. However, the stiffer the sleeve is, the less a lineperson will be able to get the sleeve over tape that has a diameter that is a little too large.

In view of the foregoing there is a need in the art for a jacket sleeve that may be made integrally with or subsequently affixed to a connector, whereby the jacket sleeve is made of a material that is more pliable than the connector. Furthermore, there is a need in the art for a jacket sleeve that provides an improved method for grasping and pulling the sleeve over the tape, mastic and exposed portions of the cable. Furthermore there is a need in the art for a method of manufacturing a jacket sleeve either integrally or separate from an electrical connector whereby the sleeve is made of a material that is more pliable than the material from which the electrical connector is made.

EP 1 245 977 A2 discloses an electrical connector with an insulating housing through which a cable may pass, which suitable for guiding a fibre optic cable. A large opening is present on one side. However, this does not provide an access point for gripping the housing.

US 6 220 888 B1 discloses a method of manufacturing an electrical connector through co-injection moulding, wherein the electrical connector includes a ribbed surface to improve grip and apertures to relieve strain in the rigid housing.

### SUMMARY OF THE INVENTION

An electrical connector comprising: a connector body comprising: an insulated housing (12); a channel in the insulated housing (12) defining a space for receiving a conducting electrical cable therein; and an aperture in a first end of the channel, wherein the aperture provides an entry point for positioning the conducting electrical cable into the channel; a pliable, elongated, elastomeric jacket sleeve (300) comprising a first end (304), a second end, and a hollow tubular body (302), wherein the first end (304) of the jacket sleeve (300) is coupled to the insulated housing (12) of the connector body along a position adjacent to the aperture; and characterized in that the electrical connector comprises: at least a pair of slots (310,312), each slot positioned along an outer periphery of the hollow tubular body (302) and adjacent to the second end of the tubular body (302), wherein each slot provides an access point for grasping the jacket sleeve (300).

Another aspect of the invention describes a method of manufacturing an electrical connector through co-injection molding comprising the steps of: preparing a mold for the creation of an electrical connector; injecting a first material into a first portion of the mold; injecting a second material into a second portion of the mold; wherein the first portion of the mold comprises a connector body comprising: an insulated housing (12); a channel in the insulated housing (12) defining a space for receiving a conducting electrical cable therein, wherein the connector body is comprised substantially of the first material; and an aperture in a first end of the channel, wherein the aperture provides an entry point for positioning the conducting electrical cable into the channel; and wherein the second portion of the mold comprises a pliable, elongated, elastomeric jacket sleeve (300) comprising a first end, a second end, and a hollow tubular body (302) having an interior portion and an outer periphery; and wherein the first end of the jacket sleeve (300) is coupled to the insulated housing (12) of the connector body along a position adjacent to the aperture of the first end of the channel, and wherein the jacket sleeve (300) is comprised substantially of the second material.

### BRIEF DESCRIPTION OF DRAWINGS

For a more complete understanding of the exemplary embodiments of the present invention and the advantages thereof, reference is now made to the following description in conjunction with the accompanying drawings in which:
Figure 1 is an elevational view, partly in cross-section, of a loadbreak connector installed on a switchgear enclosure in accordance with one exemplary embodiment of the present invention;
Figure 2 is a longitudinal cross-sectional view of a separable loadbreak connector elbow in accordance with one exemplary embodiment of the present invention;
Figure 3 is a perspective view of a jacket sleeve in an extended orientation and connected to the exemplary loadbreak connector in accordance with one exemplary embodiment of the present invention;
Figure 4 shows a perspective view of the jacket sleeve in a retracted orientation positioned adjacent to the cable receiving aperture and connected to the exemplary loadbreak connector in accordance with one exemplary embodiment of the present invention;
Figure 5 is a perspective view of the jacket sleeve in an extended orientation in accordance with one exemplary embodiment of the present invention; and Figure 6 is a cross-sectional view of a junction area between the cable and the loadbreak connector in accordance with one exemplary embodiment of the present invention.

### DETAILED DESCRIPTION OF THE EXEMPLARY EMBODIMENTS

The present invention is directed to a jacket sleeve for an electrical connector and methods for making the same. Exemplary embodiments of the invention can be more readily understood by reference to the accompanying figures.

Exemplary embodiments of the present invention include a jacket sleeve for receiving therethrough and protecting a high voltage cable in a power distribution environment. However, it should be apparent that there could be many different ways of implementing the invention in an electrical environment, and the invention should not be construed as limited to a high voltage environment or any one set of features or methods described herein. The inventive functionality of the jacket sleeve with grippable tabs will be explained in more detail in the following description and is disclosed in conjunction with the remaining figures.

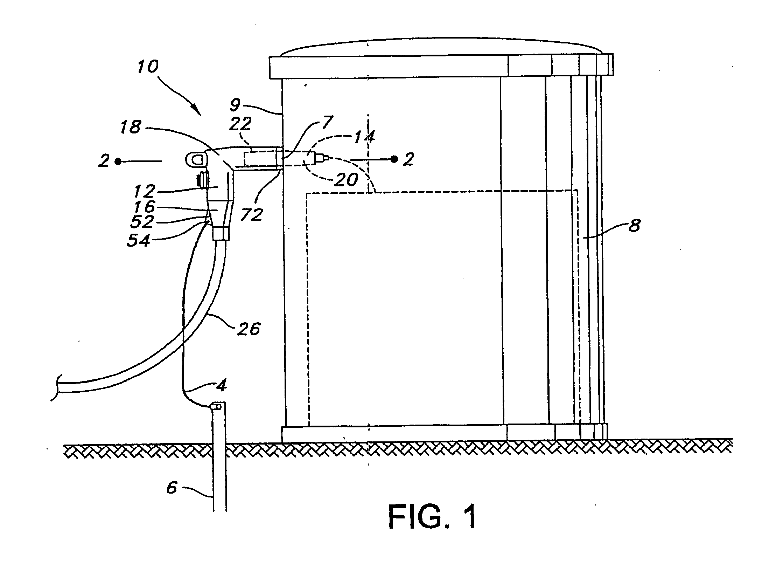

Referring now to the drawings in which like numerals represent like elements throughout the several figures, aspects of the present invention will be described. Figure 1, shows a connection between a loadbreak connector and a switchgear, in accordance with exemplary embodiments of the present invention. In Figure 1, the loadbreak connector **10** can be installed on a switchgear enclosure **9.** The switchgear enclosure **9** typically includes the operative components of a switchgear **8.** The exact type and arrangement of components can vary greatly depending on the use of the switchgear **8.** The general components and the types of arrangements of switchgear **8** are well known to those of ordinary skill in the art and will not be discussed herein. In an alternative embodiment, the loadbreak connector **10** may be installed on a transformer tank (not shown) in which a transformer is located.

The loadbreak connector **10** generally includes a bushing **14** and an elbow connector **12,** which is integrally connectable over the bushing **14.** The elbow connector **12** includes an insulated conductor receiving portion **16** which can receive a high voltage conductor or cable **26** therein, and a substantially right-angled probe retainer portion **18.** The exterior conductive surface of the elbow connector **12** is interconnected to ground **6** through a ground strap **4** interconnected to a grounding aperture, or hole, **54** in a grounding tab **52.** This ensures that the outer surface of the elbow connector **12** remains at ground potential. The bushing **14** is installed through a hole, or aperture, **7** in the wall of the switchgear enclosure wall **9** and is electrically connected to the switchgear **8.** The bushing **14** includes an internal shank end **20** and a probe receiving portion **22** forming opposite ends of the bushing **14** separated by a flange **72.** The probe receiving portion **22** of the bushing **14** is received within a probe retainer portion **18** of the elbow connector **12** upon interconnection thereof.

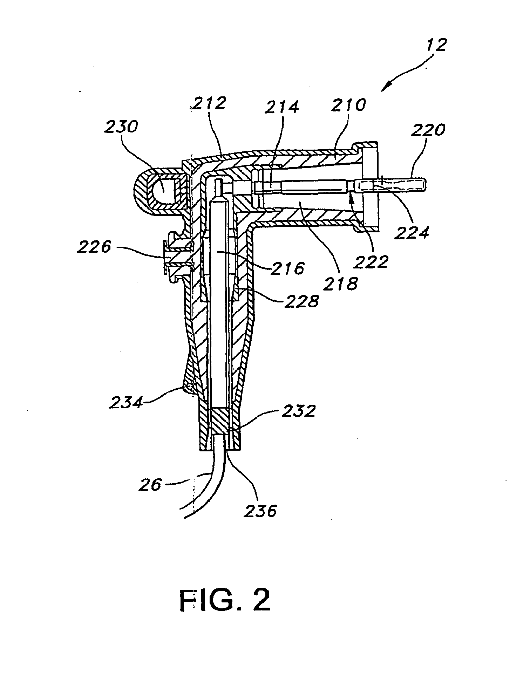

Figure 2 is a longitudinal cross-sectional view of a conventional separable loadbreak connector elbow connector **12** that may be utilized to connect and disconnect cables **26** to the switchgear **8** under energized circuit conditions at rated voltage and under electrical load current conditions in accordance with certain exemplary embodiments of the present invention. Referring now to Figures 1 and 2, the exemplary loadbreak connector bushing **14** includes a male connector elbow connector **12.** The elbow connector **12,** may be, for example, an elbow connector, electrically connected to a respective one of the cables **26** (Figure 1). The exemplary elbow connector **12** respectively engages and disengages, for example, a female connector or bushing (not shown) to achieve electrical connection or disconnection to and from the switchgear **8** or other electrical apparatus.

While the elbow connector **12** is presented as having a representative elbow-like design in Figure 2, the elbow connector **12** may be of other types and configurations known to those of ordinary skill in the art. In an exemplary embodiment, and as shown in Figure 2, the elbow connector **12** may include an elastomeric housing **210** of a material such as EPDM rubber which is provided on its outer surface with a conductive shield layer **212** which can be connected to electrical ground **6.** One end of a male contact element or probe **214,** which may be constructed from a material such as copper, extends from a conductor contact **216** within the housing **210** into a cup shaped recess **218** of the housing **210.** While the probe **214** and other conductive elements are described herein as being comprised of copper, those or ordinary skill in the art will recognize that many other metallic and non-metallic conductive materials may be used in place of copper within the scope of the present invention.

An arc follower **220** constructed from ablative material extends from an opposite end of the probe **214.** In one example, the arc follower **220** may be constructed from acetal co-polymer resin loaded with finely divided melamine. The ablative material may be injection molded on an epoxy bonded glass fiber reinforcing pin **222.** A recess **224** is provided at the junction between the probe **214** and the arc follower **220.** An aperture (not shown) is provided through the exposed end of the probe **214** for the purpose of assembly.

The elbow connector **12** may further include capacitive test aperture **226.** The test aperture **226** provides a shielded, hotstick-operable means to determine circuit condition when used with high impedance voltage sensing devices known to those of ordinary skill in the art (not shown). The test aperture **226** can include a cap (not shown) that is capable of being snapped into and covering the aperture **226** and thereby preventing access to the aperture **226** from a position external to the elbow connector **12.** The elbow connector **12** may further include a semi-conductive insert **228,** positioned such that it surrounds a portion of the conductor contact **216** and the cup-shaped recess **218** substantially near the point of interaction between the conductor contact **216** and the probe **214.** The semi-conductive insert **228** controls electrical stress within the elbow connector **12.** In one exemplary embodiment, the semi-conductive insert **228** is made of a molded peroxide cured EPDM.

The elbow connector **12** further includes a pulling eye **230.** The pulling eye **230** is positioned substantially in line with the longitudinal axis of the probe **214** and opposite the opening of the cup-shaped recess **218.** The pulling eye **230** provides a point of attachment for a hotstick or other device to engage or disengage the elbow connector **12** from the switchgear **8** or other electrical device. In one exemplary embodiment, the pulling eye **230** is composed of stainless steel, however other metallic and non-metallic elements known to those or ordinary skill in the art may be employed in place of stainless steel. The external surface of the pulling eye **230** is typically surrounded by the conductive shield layer **212.**

The elbow connector **12** can further include a compression connector **232** coupled to and positioned along and affixed to one end of the conductor contact **216.** The opposing end of the compression connector **232** is capable of slidably receiving and being affixed to a cable **26,** to provide electrical communication and transmission between the cable **26** and the conductor contact **216.** Those of ordinary skill in the art will recognize that the present invention is not limited to the use of compression connectors **232** within the elbow connector **12** and that other types of cable connectors known to those of ordinary skill in the art may be used within the scope of the invention. The elbow connector **12** further includes a grounding eye **234** that can be molded into or affixed to the semi-conductive shield **212** along the exterior of the elbow connector **12.** The grounding eye **234** is capable of receiving and being connected to a drain wire (not shown), typically made of copper or other metallic material, to ensure deadfront construction.

The elbow connector **12** also includes a cable receiving aperture **236** positioned along one end of the conductor contact **216.** In one exemplary embodiment, the aperture **236** has a substantially cylindrical shape and has an inner diameter that is dependent on the size of the cable **26** that the aperture **236** is intended to receive. One end of the cable **26** may be slidably inserted into the aperture **236** until it abuts and is connected to the compression connector **232.**

The elbow connector **12** is operable or matable to a female connector during "loadmake", "loadbreak", and "fault closure" conditions. Loadmake conditions occur when one of the contact elements, such as the probe **214,** is energized and the other contact element, such as a female contact element (not shown), is engaged with a normal load. An arc of moderate intensity is struck between the contact elements as they approach one another and until joinder under loadmake conditions. Loadbreak conditions occur when the mated probe **214** and female contact element (not shown) are separated when energized and supplying power to a normal load. Moderate intensity arcing again occurs between the contact elements from the point of separation thereof until they are sufficiently removed from one another. Fault closure conditions occur when the probe **214** and female contact element are mated, with one of them being energized and the other being engaged with a load having a fault, such as a short circuit condition. Substantial arcing occurs between the contact elements in fault closure conditions as the contact elements approach one another and are joined. In accordance with known types of loadbreak connectors, expanding gas is employed to accelerate the female contact in the direction of the probe **214** as the elbow connector **12** and female connector are engaged, thus minimizing arcing time and hazardous conditions.

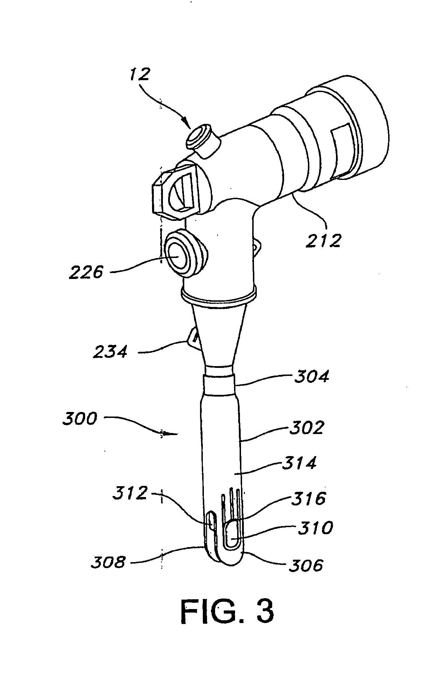

Figure 3 is a perspective view of an elbow connector 12 and jacket sleeve **300** in an extended orientation in accordance with certain exemplary embodiments of the present invention. Now referring to Figures 1, 2, and 3, a jacket sleeve **300** includes a jacket sleeve body **302,** an attachment neck **304** positioned along one end of the jacket sleeve body **302,** and one or more pull tabs **306** and **308** positioned along an opposing end of the jacket sleeve body **302.** In one exemplary embodiment, the jacket sleeve body **302** has a substantially hollow cylindrical shape, with an inner diameter that is greater than the outer diameter of the cable **26.** In one exemplary embodiment, the length of the jacket sleeve body **302** is designed to be greater than the length of cable **26** that is typically stripped for connection to the elbow connector **12** and is exposed outside of the elbow connector **12** after connection thereto. The inner and outer diameters of the jacket sleeve body **302** may be consistent or vary, such as having differing inside diameters along different portions of the longitudinal axis of the jacket sleeve body **302,** as may be desired for particular applications.

The jacket sleeve body **302,** neck **304** and tabs **306, 308** can be made of EPDM, rubber, silicone or other suitable materials known to those of ordinary skill in the art. The jacket sleeve body **302,** neck **304,** and pull tabs **306, 308** are generally made of a material that is more pliable than the semiconductive shield **212** of the elbow connector **12.** By making the jacket sleeve **300** from a material that is more pliable than the semiconductive shield **212,** it will be easier to stretch the jacket sleeve **300** over the exposed portion of the cable after mastic and tape have been applied. In certain exemplary embodiments, the jacket sleeve body **302,** neck **304** and tabs **306, 308** are made of EPDM. In another exemplary embodiment, the semiconductive shield **212,** jacket sleeve body **302,** neck **304,** and pull tabs **306** are made of different types of rubber, with the rubber used in the semiconductive shield **212** having a higher durometer than the rubber used in the jacket sleeve body **302,** neck **304** and pull tabs **306, 308.** In an alternative embodiment, the semiconductive shield **212,** the jacket sleeve body **302,** neck **304** and tabs **306, 308** are all made from a semiconductive material, wherein the semiconductive material used to make the jacket sleeve body **302,** neck **304** and pull tabs **306, 308** has a reduced amount of carbon black or an increased amount of oil such that the material has an increased pliability over the material used to make the semiconductive shield **212** for the elbow connector **12.**

The attachment neck **304** is attached or forms an integral part of the jacket sleeve body **302** and, in certain exemplary embodiments, has an inner diameter that is smaller than the inner diameter of the jacket sleeve body **302.** In embodiments where the neck **304** is attached to the jacket sleeve body **302,** known attachment means may be used, including, but not limited to adhesives and glue. In certain exemplary embodiments, the outer diameter of the neck **304** is also smaller than the outer diameter of the jacket sleeve body **302.** The inner diameter of the neck **304** is typically larger than the outer diameter of the elbow connector **12** in an area substantially adjacent to the cable receiving aperture **236.** Alternatively, the neck **304** may have the same inner and outer diameter as the jacket sleeve body **302** such that the neck **304** and jacket sleeve body **302** are one and the same. The neck **304** is typically positioned over the elbow connector **12** in an area substantially adjacent to the cable receiving aperture **236.**

The pull tabs **306, 308** are integrally connected to the jacket sleeve body **302** along the end of the jacket sleeve body **302** opposite the neck **304.** The tabs **306, 308** are generally made of the same material as the neck **304** and the jacket sleeve body **302.** While the exemplary embodiment of Figure 3 presents only two tabs, those of skill in the art will recognize that the use of one, three, or even more tabs is within the scope of the present invention. The tabs **306, 308** may be positioned equidistant from one another along the circumference of the jacket sleeve body **302** or, in the alternative, the tabs **306, 308** may have an unequal spacing arrangement. Each tab **306, 308** extends along a longitudinal axis from the end of the jacket sleeve body **302** opposite the neck **304** in a direction opposite the neck **304.** In certain exemplary embodiments, the tabs **306, 308** are formed as a continuation of the jacket sleeve body **302** with recesses cut into the jacket sleeve body **302.** In other embodiments, the tabs **306, 308** are independent extensions permanently affixed to the jacket sleeve body **302** along the exterior or interior thereof. In other exemplary embodiments, each tab **306, 308** has a radius of curvature that is equal to or substantially equal to the radius of curvature of the jacket sleeve body **302.** Each tab **306, 308** can have an end that is straight (not shown), rounded (as shown), or any other shape or curvilinear dimension.

Each tab **306, 308** includes an operating eye, slot or hole, such as slots **310, 312.** The slots **310, 312,** can have many different types of shapes and sizes known to those of ordinary skill in the art including, but not limited to oval, circular, diamond, quadrilateral, square, rectangular, and half-moon-shaped, just to name a few. In certain exemplary embodiments, the size of the slot **310, 312** is sufficient to accommodate the thumb of an average man. A reinforcement strip **316** can be included along all or a portion of the edge of each slot **310, 312.** The reinforcement strip **316** is typically an increased thickness of the material making up the tab **306, 308** and provides increased strength and durability along the edges of the slot **310, 312.**

In other embodiments, the tabs **306, 308** can be replaced with an extension of the jacket sleeve body **302** having a circular cross-section (not shown). One or more slots **310, 312** may be cut out, or molded, into the jacket sleeve body **302** and have a shape and size similar to that described hereinabove. The jacket sleeve **300** may also include one or more ribs **314.** Although only shown around tab **306,** ribs may also be positioned along the neck **304** and/or jacket sleeve body **302.** Each rib **314** typically extends along the longitudinal axis of the exterior of the neck **304,** jacket sleeve body **302,** and/or tabs **306, 308.** However, the ribs **314** may also extend circumferentially, diagonally or in any other pattern or combination of patterns along the jacket sleeve **300.** Each rib **314** is typically made of the same material as the jacket sleeve body and has a thickness that is greater than the body of the portion of the jacket sleeve the rib **314** is positioned along. The ribs **314** are designed to provide improved strength characteristics for the portion of the jacket sleeve along which they extend.

The jacket sleeve **300** can be integral to or created separately from the body of the elbow connector **12.** For example, the jacket sleeve **300** and the elbow connector **12** can be molded separately using known molding methods and the jacket sleeve **300** is affixed to the exterior of the elbow connector **12** near the cable receiving aperture **236** via glue or another known adhesive. As another example, the molded elbow connector **12** can be placed into a second mold so that the jacket sleeve **300** can be overmolded onto the elbow connector **12,** thereby bonding the jacket sleeve **300** to the elbow connector **12.**

As still another example, the elbow connector **12** and the jacket sleeve **300** can be created using co-injection molding. Using co-injection molding, the elbow connector **12** and the jacket sleeve **300** can be made integral to one another at the same time using a single mold. Using co-injection molding technology, which is known in the art, a semiconductive material having a higher durometer can be injected into one side of the mold and a softer, more pliable material having a lower durometer can be injected into the other side of the mold. The two materials would meet substantially near the neck **302** of the jacket sleeve **300,** wherein the semiconductive material would make up a substantial portion of the elbow connector **12** and the more pliable material would make up a substantial portion of the jacket sleeve **300.**

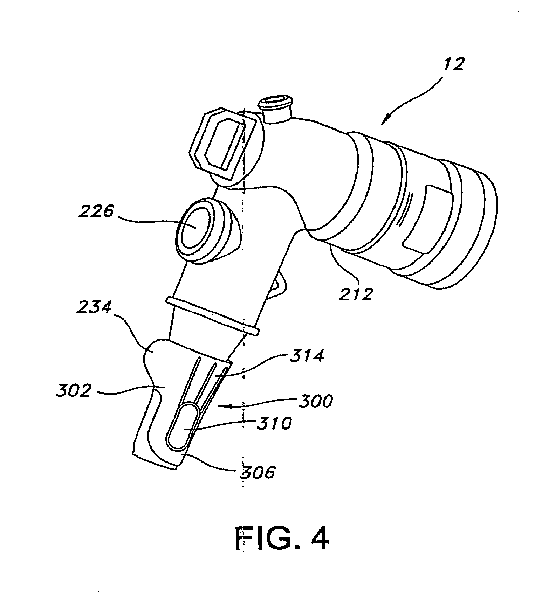

Figure 4 shows a perspective view of the jacket sleeve **300** in a retracted orientation positioned adjacent to the cable receiving aperture **236** and affixed to the exemplary elbow connector **12** in accordance with one exemplary embodiment of the present invention. Now referring to Figures 2 and 4, the exemplary jacket sleeve **300** is shown folded upon itself along a portion of the elbow connector **12** such that a portion of the jacket sleeve body **302** is covering the grounding eye **234.** The exemplary positioning of the jacket sleeve **300** shown in Figure 4 is typically initiated prior to placing the cable **26** into the cable receiving aperture **236.** Once the cable **26** has been inserted into the cable receiving aperture **236** and affixed to the elbow connector **12,** a lineperson can grasp each of the slots **310, 312** with one or more of his fingers, which include the thumbs, and pull the jacket sleeve body **302** in the direction of the exposed cable **26** until the jacket sleeve body **302** is extended to cover the exposed portion of the cable **26.** While the exemplary embodiment of Figure 4 shows the jacket sleeve **300** folded upon itself, those of ordinary skill in the art will recognize that there are many ways to position the jacket sleeve **300** along the exterior of the elbow connector **12** to make the aperture **236** more accessible while positioning the slots **310, 312** in an accessible position for the lineperson once the cable **26** has been attached.

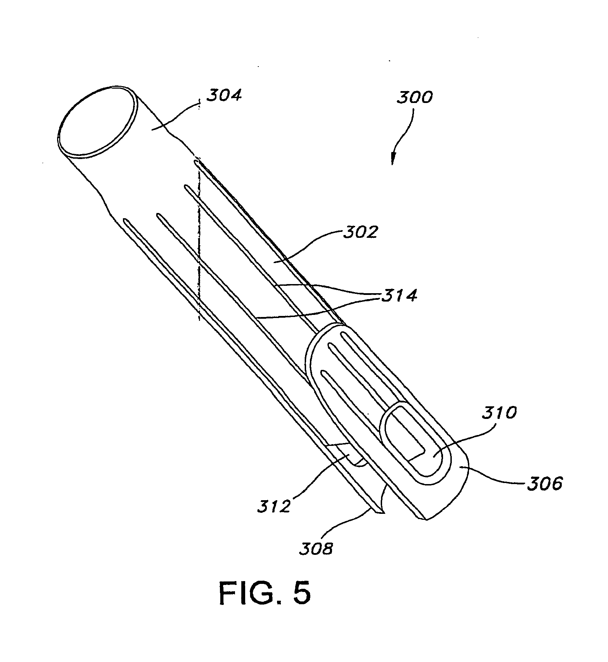

Figure 5 presents a perspective view of the exemplary jacket sleeve **300'** of Figure 3 in an extended orientation. Now referring to Figures 3 and 5, the jacket sleeve **300'** of Figure 5 is substantially similar to that shown and described in Figure 3. The exemplary jacket sleeve **300'** includes multiple ribs **314** that extend along the longitudinal axis of both the jacket sleeve body **302** and the tabs **306, 308.** In addition, tabs **306, 308** of Figure 5 have a larger outside diameter than the outside diameter the jacket sleeve body **302.** Furthermore, the neck **304** has an outside diameter that is smaller than the outside diameter of the jacket sleeve body **302.** As discussed hereinabove, the jacket sleeve **300'** may be molded in a separate operation from the molding operation of the elbow connector **12.** The neck **304** of the jacket sleeve **300'** may then be attached to the elbow connector **12** adjacent to the cable receiving aperture **236.**

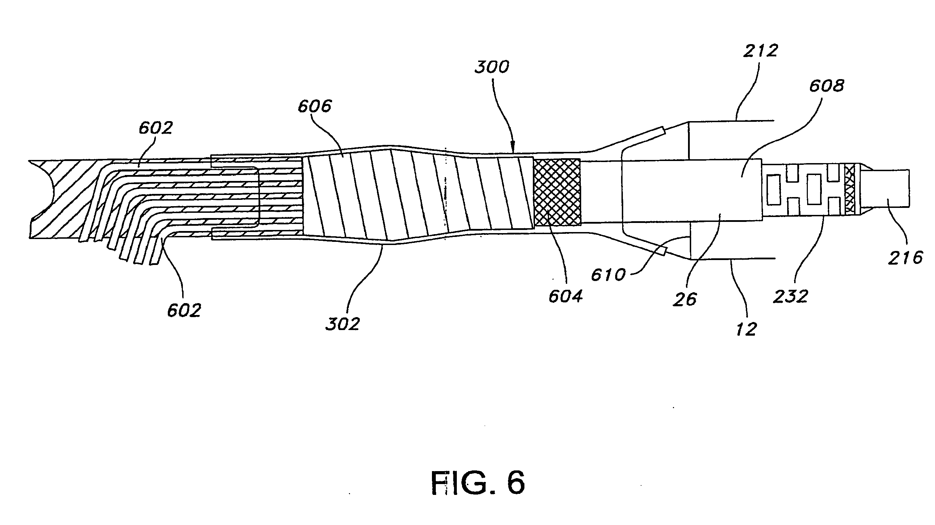

Figure 6 is a cross-sectional view of a junction area between the cable **26** and the elbow connector **12** in accordance with certain exemplary embodiments of the present invention. Referring now to Figures 2, 3, and 6, the exemplary junction area includes a conductor contact **216** attached to one end of a compression connector **232.** The other end of the compression connector **232** is attached to the cable **26.** The cable **26** may include the following layers (from interior to exterior): a conductor, conductor shield, insulation, insulation shield, concentric neutrals, and a cable jacket. One or more of the layers may be stripped back to expose the underlying layers. Typically, the conductor shield, insulation, insulation shield, concentric neutrals, and cable jacket layers of the cable **26** are stripped back at the compression connector **232** so that the conductor **608** of the cable **26** can be affixed to the compression connector **232.**

To limit the amount of water and other elements that may come into contact with the inner layers of the cable **26,** the jacket sleeve **300** and other materials are placed around the exposed portions of the cable **26** along the jacket body **302** portion of the jacket sleeve **300.** For example, mastic **604,** or another form of gum, resin, or adhesive, may be placed on the exposed portions of the cable **26,** including over the concentric neutrals **602.** The objective of the mastic **604** is to prevent water or other elements or dirt from reaching the concentric neutrals **602** and corroding them or other portions of the cable **26.**

Electrical tape **606** or other forms of tape may be wrapped around the mastic **604** and the exposed portions of the cable **26.** The electrical tape **606** may help to maintain the general shape of the mastic **604** and keep the mastic **604** in contact with the exposed portions of the cable **26.** Once the tape **606** and mastic **604** are in place, the jacket sleeve **300,** which is positioned along the cable receiving aperture **236** of the elbow connector **12** along the semiconductive layer **212,** may be grasped at the slots **308, 310** and pulled toward the portion of the cable **26** covered with mastic **604** and tape **606** until the jacket sleeve **300** completely covers the mastic **604** and taped **606** portion of the cable **26** and the jacket sleeve **300** has an interference fit with the taped portion of the cable **26** along the jacket body **302.** In certain embodiments, the objective of the jacket sleeve **300** is not to create a water-tight or element-tight seal but is instead to hold or substantially hold the mastic **604** and tape **606** in position over the exposed portion of the cable **26.**

In certain embodiments, the method of connecting a cable **26** to the elbow connector **12** and protecting the exposed portion of the cable **26** with a jacket sleeve **300** begins by wrapping a strip of mastic **604** around the exterior cable jacket. The cable jacket can then be stripped off of a portion of the cable **26.** The exposed concentric neutrals **602** of the cable **26** are bent back along the length of the cable **26** and over the mastic **604.** The concentric neutrals 602 are pressed into the mastic **604** and additional mastic **604** is wrapped around the insulation shield, cable jacket, and concentric neutrals embedded in the first layer of mastic **604.** Additional mastic **604** or electrical tape **606** may be added on top of the second layer of mastic **604** if necessary to build up the diameter of the protected area so that the jacket sleeve **300** will make an interference fit along the jacket body **302** with the tape **606** that is subsequently wrapped around the mastic **604.**

Next, the insulation and the insulation shield are removed from the exposed end of the cable **26.** A compression connector **232** is connected to the conductor **608** of the cable **26** and rotated to spread the inhibitor of the compression connector **232.** The cable **26** and cable receiving aperture **236** are lubricated and the elbow connector **12** is slid down upon the conductor **608** of the cable **26.** A copper wire or other equivalent is attached to the grounding eye **234.** The lineperson then grabs the jacket sleeve **300** by placing one or more fingers through each of the slots **310, 312.** The lineperson pulls the jacket sleeve **300** in the direction of the mastic covered cable **26** to a point such that the jacket sleeve body **302** covers the exposed portion of the cable **26** outside of the elbow connector **12.** The copper wire is attached to ground **6** and the elbow connector **12** is attached to the switchgear **8** or transformer.

In conclusion, the present invention is directed to a jacket sleeve having pull tabs for use with elbow connectors and other electrical products in which exposed wire or cable must be protected. In addition, the present invention is directed to methods of making and using a jacket sleeve with pull tabs. The foregoing description relates to certain exemplary embodiments of the present invention; it will be evident to those of ordinary skill in the art that various modifications and changes may be made thereto without departing from the spirit and the scope of the present invention as set forth in the appended claims and equivalents thereof.

## Claims

1. An electrical connector comprising:
a connector body comprising:
an insulated housing (12);
a channel in the insulated housing (12) defining a space for receiving a conducting electrical cable therein; and
an aperture in a first end of the channel, wherein the aperture provides an entry point for positioning the conducting electrical cable into the channel;
a pliable, elongated, elastomeric jacket sleeve (300) comprising a first end (304), a second end, and a hollow tubular body (302), wherein the first end (304) of the jacket sleeve (300) is coupled to the insulated housing (12) of the connector body along a position adjacent to the aperture; and
at least a pair of slots (310,312), each slot positioned along an outer periphery of the hollow tubular body (302) and adjacent to the second end of the tubular body (302), wherein each slot provides an access point for grasping the jacket sleeve (300).

2. The electrical connector of Claim 1, further comprising at least a pair of pull tabs (306,308) coupled to the second end of the tubular body (302), wherein each slot (310,312) of the jacket sleeve (300) is positioned along a periphery of one of the tabs (306,308) and extends therethrough.

3. The electrical connector of Claim 2, wherein the jacket sleeve (300) is integral with the insulated housing (12) and the tabs (306,308) are integral with the jacket sleeve (300).

4. The electrical connector of Claim 2, wherein the jacket sleeve (300) and tabs (306,308) can be initially folded back upon themselves over the first end of the channel so as to limit engagement of the jacket sleeve (300) with a cable until after a portion of the cable is inserted into the channel.

5. The electrical connector of Claim 2, wherein the connector body (12) comprises a first material and the jacket seal and pull tabs (306,308) comprise a second material, said second material being more pliable that the first material.

6. The electrical connector of Claim 5, wherein the first material and the second material comprise rubber, said second material having a lower durometer than the first material.

7. The electrical connector of Claim 2, further comprising at least one rib (314) integral to and extending along at least a portion of the longitudinal length of at least one of the tabs (306,308), wherein the ribs (314) provide additional strength to the tab.

8. The electrical connector of Claim 1, wherein the jacket sleeve (300) forms a barrier to the ingress of moisture into a cable inserted into the channel of the insulated housing (12).

9. The electrical connector of Claim 1, further comprising a molded contact tube assembly inserted into the insulated housing (12), wherein the assembly has a first end and a second end, said first end is positioned near a rim of the insulated housing (12) and the second end is positioned generally near a middle of the insulated housing (12).

10. The electrical connector of Claim 1, wherein the insulated housing (12) comprises a conductive material.

11. The electrical connector of Claim 1, wherein the shape of the slot (310,312) comprises an oval.

12. The electrical connector of Claim 1, further comprising at least one rib (314) integral to and extending along at least a portion of the longitudinal length of the jacket sleeve (300), wherein the ribs (314) provide additional strength to the jacket sleeve (300).

13. The electrical connector of claim 1, wherein each slot (310,312) in the jacket sleeve (300) comprises an opening capable of receiving an adult finger inserted therein.

14. A method of manufacturing an electrical connector through co-injection molding comprising the steps of:
preparing a mold for the creation of an electrical connector;
injecting a first material into a first portion of the mold;
injecting a second material into a second portion of the mold;
wherein the first portion of the mold comprises a connector body comprising:
an insulated housing (12);
a channel in the insulated housing (12) defining a space for receiving a conducting electrical cable therein, wherein the connector body is comprised substantially of the first material; and
an aperture in a first end of the channel, wherein the aperture provides an entry point for positioning the conducting electrical cable into the channel; and
wherein the second portion of the mold comprises a pliable, elongated, elastomeric jacket sleeve, (300) comprising a first end, a second end, and a hollow tubular body (302) having an interior portion and an outer periphery; and
wherein the first end of the jacket sleeve (300) is coupled to the insulated housing (12) of the connector body along a position adjacent to the aperture of the first end of the channel, and wherein the jacket sleeve (300) is comprised substantially of the second material.

15. The method of Claim 14, wherein the jacket sleeve (300) further comprises at least a pair of slots (310,312), each slot positioned along the outer periphery of the hollow tubular body (302) and adjacent the second end of the jacket sleeve (300), wherein each slot provides an access point for grasping the jacket sleeve (300).

16. The method of Claim 15, wherein the jacket sleeve (300) further comprises at least a pair of pull tabs (306,308) coupled to the second end of the jacket sleeve (300), wherein each slot (310,312) of the jacket sleeve (300) is positioned along a periphery of one of the tabs (306,308) and extends therethrough.

17. The method of Claim 14, wherein the second material is more pliable than the first material.

18. The method of Claim 14, wherein the second material has a lower durometer than the first material.

## Patentansprüche

1. Elektrischer Steckverbinder, umfassend:
Einen Steckverbinderkörper, umfassend:
Ein isoliertes Gehäuse (12);
einen Kanal im isolierten Gehäuse (12), der einen Raum zur Aufnahme eines leitenden elektrischen Kabels darin definiert; und
eine Öffnung in einem ersten Ende des Kanals, wobei die Öffnung einen Eingangspunkt zur Positionierung des leitenden elektrischen Kabels in den Kanal bereitstellt;
einen biegsamen, länglichen, elastomeren Kabelmantel (300), der ein erstes Ende (304), ein zweites Ende und einen hohlen röhrenförmigen Körper (302) umfasst, wobei das erste Ende (304) des Kabelmantels (300) an das isolierte Gehäuse (12) des Steckverbinderkörpers entlang einer Position gekoppelt ist, die an die Öffnung angrenzt; und
wenigstens ein Paar Schlitze (310, 312), wobei jeder Schlitz entlang eines äußeren Umfangs des hohlen röhrenförmigen Körpers (302) und angrenzend an das zweite Ende des röhrenförmigen Körpers (302) positioniert ist, wobei jeder Schlitz einen Zugangspunkt zum Ergreifen des Kabelmantels (300) bereitstellt.

2. Elektrischer Steckverbinder nach Anspruch 1, der ferner wenigstens ein Paar Abziehlaschen (306, 308) umfasst, die an das zweite Ende des röhrenförmigen Körpers (302) gekoppelt sind, wobei jeder Schlitz (310, 312) des Kabelmantels (300) entlang eines Umfangs einer der Laschen (306, 308) positioniert ist und sich dadurch erstreckt.

3. Elektrischer Steckverbinder nach Anspruch 2, wobei der Kabelmantel (300) in das isolierte Gehäuse (12) integriert ist und die Laschen (306, 308) in den Kabelmantel (300) integriert sind.

4. Elektrischer Steckverbinder nach Anspruch 2, wobei der Kabelmantel (300) und die Laschen (306, 308) über sich selbst über das erste Ende des Kanals zurück gefaltet werden können, um Kupplung des Kabelmantels (300) mit einem Kabel zu beschränken bis nachdem ein Teil des Kabels in den Kanal eingeschoben ist.

5. Elektrischer Steckverbinder nach Anspruch 2, wobei der Steckverbinderkörper (12) ein erstes Material umfasst und die Manteldichtung und die Abziehlaschen (306, 308) ein zweites Material umfassen, wobei das zweite Material biegsamer als das erste Material ist.

6. Elektrischer Steckverbinder nach Anspruch 5, wobei das erste Material und das zweite Material Gummi umfassen, wobei das zweite Material niedrigeres Durometer als das erste Material aufweist.

7. Elektrischer Steckverbinder nach Anspruch 2, der ferner wenigstens eine Rippe (314) umfasst, die in einen Teil der longitudinalen Länge wenigstens einer der Laschen (306, 308) integriert ist und sich an diesem entlang erstreckt, wobei die Rippen (314) der Lasche zusätzliche Festigkeit bereitstellen.

8. Elektrischer Steckverbinder nach Anspruch 1, wobei der Kabelmantel (300) eine Barriere gegen das Eindringen von Feuchtigkeit in ein Kabel bildet, das in den Kanal des isolierten Gehäuses (12) eingeschoben wurde.

9. Elektrischer Steckverbinder nach Anspruch 1, der ferner eine geformte Kontaktrohrbaugruppe umfasst, die in das isolierte Gehäuse (12) eingeschoben ist, wobei die Baugruppe ein erstes Ende und ein zweites Ende aufweist, wobei das erste Ende nahe eines Randes des isolierten Gehäuses (12) positioniert ist und das zweite Ende generell nahe einer Mitte des isolierten Gehäuses (12) positioniert ist.

10. Elektrischer Steckverbinder nach Anspruch 1, wobei das isolierte Gehäuse (12) ein leitendes Material umfasst.

11. Elektrischer Steckverbinder nach Anspruch 1, wobei die Form des Schlitzes (310, 312) ein Oval umfasst.

12. Elektrischer Steckverbinder nach Anspruch 1, der ferner wenigstens eine Rippe (314) umfasst, die in einen Teil der longitudinalen Länge des Kabelmantels (300) integriert ist und sich an diesem entlang erstreckt, wobei die Rippen (314) dem Kabelmantel (300) zusätzliche Festigkeit bereitstellen.

13. Elektrischer Steckverbinder nach Anspruch 1, wobei jeder Schlitz (310, 312) im Kabelmantel (300) eine Öffnung umfasst, die fähig ist, den eingeschobenen Finger eines Erwachsenen darin aufzunehmen.

14. Verfahren zur Herstellung eines elektrischen Steckverbinders durch Co-Spritzgießen, das folgende Schritte umfasst:
Vorbereiten einer Form für die Gestaltung eines elektrischen Steckverbinders;
Einspritzen eines ersten Materials in einen ersten Teil der Form;
Einspritzen eines zweiten Materials in einen zweiten Teil der Form;
wobei der erste Teil der Form einen Steckverbinderkörper umfasst, umfassend:
Ein isoliertes Gehäuse (12);
einen Kanal im isolierten Gehäuse (12), der einen Raum zur Aufnahme eines leitenden elektrischen Kabels darin definiert, wobei der Steckverbinderkörper im Wesentlichen aus dem ersten Material besteht; und
eine Öffnung in einem ersten Ende des Kanals, wobei die Öffnung einen Eingangspunkt zum Positionieren des leitenden elektrischen Kabels in den Kanal bereitstellt; und wobei der zweite Teil der Form einen biegsamen, länglichen, elastomeren Kabelmantel (300) umfasst, der ein erstes Ende, ein zweites Ende und einen hohlen röhrenförmigen Körper (302) umfasst, der einen inneren Teil und einen äußeren Umfang aufweist; und
wobei das erste Ende des Kabelmantels (300) an das isolierte Gehäuse (12) des Steckverbinderkörpers entlang einer Position gekoppelt ist, die an die Öffnung des ersten Endes des Kanals angrenzt und, wobei der Kabelmantel (300) im Wesentlichen aus dem zweiten Material besteht.

15. Verfahren nach Anspruch 14, wobei der Kabelmantel (300) ferner wenigstens ein Paar Schlitze (310, 312) umfasst, wobei jeder Schlitz entlang des äußeren Umfangs des röhrenförmigen Körpers (302) und angrenzend an das zweite Ende des Kabelmantels (300) positioniert ist, wobei jeder Schlitz einen Zugangspunkt zum Ergreifen des Kabelmantels (300) bereitstellt.

16. Verfahren nach Anspruch 15, wobei der Kabelmantel (300) ferner wenigstens ein Paar Abziehlaschen (306, 308) umfasst, die an das zweite Ende des Kabelmantels (300) gekoppelt sind, wobei jeder Schlitz (310, 312) des Kabelmantels (300) entlang eines Umfangs einer der Laschen (306, 308) positioniert ist und sich dadurch erstreckt.

17. Verfahren nach Anspruch 14, wobei das zweite Material biegsamer als das erste Material ist.

18. Verfahren nach Anspruch 14, wobei das zweite Material ein niedrigeres Durometer als das erste Material aufweist.

## Revendications

1. Connecteur électrique comprenant :
un corps de connecteur comprenant:
un boîtier isolé (12) ;
un canal dans le boîtier isolé (12) définissant un espace pour recevoir un câble électrique conducteur à l'intérieur ; et
une ouverture dans une première extrémité du canal, cette ouverture fournissant un point d'entrée pour positionner le câble électrique conducteur dans le canal ;
un manchon de gaine élastomérique, allongé, pliable (300) comportant une première extrémité (304), une deuxième extrémité, et un corps tubulaire creux (302), la première extrémité (304) du manchon de gaine (300) étant accouplée au boîtier isolé (12) du corps du connecteur le long d'une position adjacente à l'ouverture ; et
au moins une paire de fentes (310, 312), chaque fente étant positionnée le long d'un pourtour extérieur du corps tubulaire creux (302) et en position adjacente à la deuxième extrémité du corps tubulaire (302), chaque fente fournissant un point d'accès pour saisir le manchon de gaine (300).

2. Connecteur électrique selon la revendication 1, comprenant en outre au moins une paire de tirettes (306, 308) accouplées à la deuxième extrémité du corps tubulaire (302), chaque fente (310, 312) du manchon de gaine (300) étant positionnée le long d'un pourtour d'une des tirettes (306, 308) et s'étendant à travers elle.

3. Connecteur électrique selon la revendication 2, dans lequel le manchon de gaine (300) est solidaire du boîtier isolé (12) et les tirettes (306, 308) sont solidaires du manchon de gaine (300).

4. Connecteur électrique selon la revendication 2, dans lequel le manchon de gaine (300) et les tirettes (306, 308) peuvent initialement être repliés sur eux-mêmes au-dessus de la première extrémité du canal de façon à limiter l'engagement du manchon de gaine (300) avec un câble après qu'une partie du câble a été insérée dans le canal.

5. Connecteur électrique selon la revendication 2, dans lequel le corps du connecteur (12) comprend un premier matériau et le joint d'étanchéité de la gaine et les tirettes (306, 308) comprennent un deuxième matériau, ledit deuxième matériau étant plus pliable que le premier matériau.

6. Connecteur électrique selon la revendication 5, dans lequel le premier matériau et le deuxième matériau comprennent du caoutchouc, ledit deuxième matériau ayant une lecture de duromètre plus basse que le premier matériau.

7. Connecteur électrique selon la revendication 2, comprenant en outre au moins une nervure (314) solidaire de et s'étendant le long d'au moins une partie de la longueur longitudinale d'au moins une des tirettes (306, 308), ces nervures (314) fournissant une solidité supplémentaire à la tirette.

8. Connecteur électrique selon la revendication 1, dans lequel le manchon de gaine (300) forme une barrière à l'entrée d'humidité dans un câble inséré dans le canal du boîtier isolé (12).

9. Connecteur électrique selon la revendication 1, comprenant en outre un ensemble tube de contact moulé inséré dans le boîtier isolé (12), cet ensemble ayant une première extrémité et une deuxième extrémité, ladite première extrémité étant positionnée près d'un rebord du logement isolé (12) et la deuxième extrémité étant généralement positionnée près d'un milieu du boîtier isolé (12).

10. Connecteur électrique selon la revendication 1, dans lequel le boîtier isolé (12) comprend un matériau conducteur.

11. Connecteur électrique selon la revendication 1, dans lequel la forme de la fente (310, 312) comprend un ovale.

12. Connecteur électrique selon revendication 1, comprenant en outre au moins une nervure (314) solidaire de et s'étendant le long d'au moins une partie de la longueur longitudinale du manchon de gaine (300), ces nervures (314) fournissant une solidité supplémentaire au manchon de gaine (300).

13. Connecteur électrique selon la revendication 1, dans lequel chaque fente (310, 312) dans le manchon de gaine (300) comporte une ouverture capable de recevoir un doigt d'adulte inséré à l'intérieur.

14. Procédé de fabrication d'un connecteur électrique par moulage par injection sandwich, comprenant les étapes consistant à :
préparer un moule pour la création d'un connecteur électrique :
injecter un premier matériau dans une première partie du moule ;
injecter un deuxième matériau dans une deuxième partie du moule ;
dans lequel la première partie du moule comprend un corps de connecteur comprenant :
un boîtier isolé (12) ;
un canal dans le boîtier isolé (12) définissant un espace pour recevoir un câble électrique conducteur à l'intérieur, dans lequel le corps du connecteur consiste essentiellement en le premier matériau ; et
une ouverture dans une première extrémité du canal, cette ouverture fournissant un point d'entrée pour positionner le câble électrique conducteur dans le canal ; et
dans lequel la deuxième partie du moule comprend un manchon de gaine (300) élastomérique, allongé, pliable comportant une première extrémité, une deuxième extrémité, et un corps tubulaire creux (302) ayant une partie intérieure et un pourtour extérieur ; et
dans lequel la première extrémité du manchon de gaine (300) est accouplée au boîtier isolé (12) du corps du connecteur le long d'une position adjacente à l'ouverture de la première extrémité du canal, et dans lequel le manchon de gaine (300) consiste essentiellement en le deuxième matériau.

15. Procédé selon la revendication 14, dans lequel le manchon de gaine (300) comprend en outre au moins une paire de fentes (310, 312), chaque fente étant positionnée le long du pourtour extérieur du corps tubulaire creux (302) et en position adjacente à la deuxième extrémité du manchon de gaine (300), dans lequel chaque fente fournit un point d'accès pour saisir le manchon de gaine (300).

16. Procédé selon la revendication 15, dans lequel le manchon de gaine (300) comprend en outre au moins une paire de tirettes (306, 308) accouplées à la deuxième extrémité du manchon de gaine (300), chaque fente (310, 312) du manchon de gaine (300) étant positionnée le long d'un pourtour d'une des tirettes.(306, 308) et s'étendant à travers elle.

17. Procédé selon la revendication 14, dans lequel le deuxième matériau est plus pliable que le premier matériau.

18. Procédé selon la revendication 14, dans lequel le deuxième matériau a une lecture de duromètre plus basse que le premier matériau.
